# EUROPEAN PATENT APPLICATION

(11) **EP 4 468 014 A1**
(43) Date of publication of application: **27.11.2024**
(21) Application number: 23174798.1
(22) Date of filing: 23.05.2023
(51) Int. Cl.: G01S 5/00, G01S 19/48

(54) **METHOD FOR POSITIONING ESTIMATION IN A HYBRID POSITIONING SYSTEM**

(71) Applicant: u-blox AG, 8800 Thalwil (CH)
(72) Inventor: Karlsson, Peter, 211 75 Malmö (SE); Krantz, Jakob, 211 75 Malmö (SE); Papaharalabos, Stelios, 15125 Maroussi (GR); Rezaei, Farshid, 211 75 Malmö (SE); Lerup, Peter, 211 75 Malmö (SE); Velapatino Gamarra, Marco, 211 75 Malmö (SE); Ellina, Eleftheria, 15125 Maroussi (GR)
(74) Representative: Epping - Hermann - Fischer

(57) **Abstract**

A method is provided for positioning estimation in a hybrid positioning system comprising a first positioning system, which is based on global navigation satellite system, GNSS, a second positioning system, which includes a plurality of locator devices, and a hybrid positioning engine. The method comprises obtaining, by a mobile device, first positioning information based on first positioning signals received from the first positioning system; transmitting, by the mobile device, second positioning signals to the plurality of locator devices via a first wireless network; generating, by the plurality of locator devices, second positioning information based on the second positioning signals, and retrieving the first positioning information from the second positioning signals; providing, by the plurality of locator devices, the first positioning information and the second positioning information to the hybrid positioning engine; and determining, by the hybrid positioning engine, an estimated position of the mobile device based on the first positioning information and the second positioning information.

## Description

### TECHNICAL FIELD

This disclosure relates to a method for positioning estimation in a hybrid positioning system. The disclosure further relates to a mobile device, a hybrid positioning engine and a locator device.

### BACKGROUND ART

In many applications, positioning systems are used for estimating positions of a mobile device or tracking a movement of the mobile device. The mobile device may be a tag device, a mobile phone, a smart watch, etc. that is associated with a moving object, such as a human being, that may move anywhere around rooms, buildings, roads, outdoor areas, etc. Different positioning systems may provide different types of positioning information of the mobile device. For example, a global navigation satellite system, GNSS, can provide coordinate positions of the mobile device in the GNSS system, a low-energy Bluetooth, BLE, positioning system, an ultra-wideband, UWB, or a WiFi positioning system utilizes a plurality of locator devices in an area, namely anchor points, APs, to provide relative positions of the mobile device with respect to APs.

Different positioning systems may have different availability and accuracy for positioning estimation when the mobile device moves. For instance, GNSS signals may have relative poorer reception and accuracy in indoor areas, BLE, UWB or WiFi may have limited coverage provided by APs. When more than one positioning system is available, a hybrid positioning system can be formed to combine the positioning information from multiple positioning systems, so that a continuous tracking of the mobile device can be realized. However, in such a hybrid positioning system, the mobile device needs to provide multiple positioning information from multiple positioning systems, while such a mobile device is typically restricted with battery and processing power. The hybrid positioning system needs to operate in an efficient and reliable way.

In conventional applications, such challenges in a hybrid positioning system are not well addressed.

### SUMMARY OF INVENTION

An object to be achieved is to provide an improved operating concept for positioning estimation that allows an efficient and reliable operation in a hybrid positioning system.

According to the present disclosure, a hybrid positioning system comprises more than one positioning systems, for example, the hybrid positioning system comprises two positioning systems, wherein one of them is a GNSS system, another one is a BLE, a UWB or a WiFi positioning system or, more generally, a short-range positioning system. The BLE, the UWB or the WiFi positioning system includes a plurality of APs or, more generally, locator devices deployed in an area, for example, an indoor area. A hybrid positioning engine is comprised in the hybrid positioning system and obtains positioning information for a mobile device from both the two positioning systems as long as they are available. For example, the hybrid positioning engine obtains GNSS positioning information of the mobile device and positioning information from APs with respect to the mobile device. The hybrid positioning engine is able to estimate positions of the mobile device based on the positioning information from either one or both of the two positioning systems.

In the hybrid positioning system, the mobile device is in wireless communication with the hybrid positioning engine and APs. For example, the mobile device is capable of receiving GNSS signals, sending signals via a first wireless network with APs and sending signals via a second wireless network to the hybrid positioning engine. This can be achieved either by incorporating several modules, e.g. GNSS receiver module, BLE module, UWB module, WiFi module, or cellular module in the mobile device or by using a single module integrating different chips in the mobile device.

The improved operating concept is based on the idea that, when the mobile device is in the coverage of APs of the BLE/UWB/WiFi positioning system and is able to communicate over the first wireless network with APs, the GNSS positioning information of the GNSS positioning system is transmitted over the same wireless network with APs, i.e. the first wireless network, so that the mobile device only needs to transmit signals over one wireless network, and the positioning information from both the different positioning systems can be obtained by the hybrid positioning engine from APs and a hybrid positioning estimation can be performed.

By utilizing the same wireless network, the mobile device saves power by avoiding transmitting different signals over different wireless networks for providing different positioning information while a hybrid positioning estimation can be performed. The hybrid positioning system can operate in an efficient and reliable way.

Moreover, time synchronization and reliability determination are performed in the hybrid positioning system to further provide a reliable operation in the hybrid positioning system.

According to the present disclosure, a method for positioning estimation in a hybrid positioning system is provided. The hybrid positioning system comprises a first positioning system, which is based on GNSS, a second positioning system, which includes a plurality of locator devices, and a hybrid positioning engine. According to the method a mobile device obtains first positioning information based on first positioning signals received from the first positioning system, wherein the first positioning information comprises GNSS position data of the mobile device; the mobile device transmits second positioning signals to the plurality of locator devices via a first wireless network, wherein the second positioning signals contain the first positioning information; the plurality of locator devices generate second positioning information based on the second positioning signals, wherein the second positioning information comprises positioning data of the mobile device in the second positioning system, and retrieve the first positioning information from the second positioning signals; the plurality of locator devices provide the first positioning information and the second positioning information to the hybrid positioning engine; and the hybrid positioning engine determines an estimated position of the mobile device based on the first positioning information and the second positioning information. The method allows the first positioning information to be provided via the second positioning system, and thus the efficiency is improved in the hybrid positioning system.

In some implementations, each of the plurality of locator devices transmits respective responses to the mobile device upon receiving the respective second positioning signals. If the mobile device does not receive any of the responses, the mobile device may stop transmitting the second positioning signals. In such a case the mobile device transmits third positioning signals to the plurality of locator devices via the first wireless network and transmits the first positioning information to the hybrid positioning engine over a second wireless network; the plurality of locator devices generate the second positioning information based on the third positioning signals, and provide the second positioning information to the hybrid positioning engine.

If the mobile device receives at least one of the responses, the mobile device may stop transmitting the third positioning signals, resume transmitting the second positioning signals to the plurality of locator devices via the first wireless network, the plurality of locator devices generate the second positioning information based on the second positioning signals, retrieve the first positioning information from the second positioning signals, and provide the first positioning information and the second positioning information to the hybrid positioning engine. By utilizing responses from the locator devices, the hybrid positioning system ensures that the first positioning information is reliably delivered over the first wireless network in the second positioning system, thus the reliability is improved in the hybrid positioning system.

For example, the first wireless network is a Bluetooth network, in particular a BLE network, a UWB network, or a WiFi network. In various implementations, the second wireless network is a WiFi network or a cellular network.

In an example implementation, the second positioning system is based on Bluetooth technology, and the responses are generated according to periodic advertising with responses, PAwR, in the Bluetooth technology. In a further example implementation, the second positioning system is based on UWB technology. Frames sent from the locator devices for estimating distances between the mobile device and respective locator devices can be considered as the responses. In yet another example implementation, the second positioning system is based on WiFi technology. The locator devices may be WiFi access points. Signaling from the locator devices according to the Request to Send/Clear to Send function specified in IEEE 802.11 standards can be considered as the responses.

In some implementations, the first positioning information further comprises first time information in the first positioning system. The mobile device generates second time information for the second positioning system. For example, the mobile device generates the second time information based on the first time information. The mobile device includes the second time information in the second positioning signals and/or the third positioning signals. The hybrid positioning engine performs a synchronization of the first positioning information and the second positioning information based on the first time information and the second time information. With the time information for synchronization, only the positioning information belonging to a common time frame may be used for a hybrid positioning estimation, and thus the accuracy and the reliability of the positioning estimation is improved in the hybrid positioning system.

In an example implementation, the second positioning information comprises at least one of: distance estimation based on received signal strength and/or channel sounding and/or round trip time; and relative angle estimation based on signal arriving angles.

In some implementations, the first positioning information further comprises quality indication in the first positioning system. The hybrid positioning engine determines a first reliability of the first positioning information based on the quality indication. If the first positioning information is determined to be reliable, the hybrid positioning engine determines the estimated position of the mobile device based on the first positioning information and the second positioning information. If the first positioning information is determined to be not reliable, the hybrid positioning engine determines the estimated position of the mobile device based on the second positioning information. With the quality indication, the accuracy and the reliability of the positioning estimation is improved in the hybrid positioning system.

In some implementations, the plurality of locator devices includes in the second positioning information confidence values of the positioning data of the mobile device in the second positioning system. The hybrid positioning engine determines a second reliability of the second positioning information based on the confidence values. If the second positioning information is determined to be reliable, the hybrid positioning engine determines the estimated position of the mobile device based on the first positioning information and the second positioning information. If the second positioning information is determined to be not reliable, the hybrid positioning engine determines the estimated position of the mobile device based on the first positioning information. With the confidence values, the accuracy and the reliability of the positioning estimation is improved in the hybrid positioning system.

In an example implementation, determining the estimated position of the mobile device based on the first positioning information and the second positioning information comprises a fusion processing of the first positioning information and the second positioning information using a signal processing algorithm and/or a machine learning algorithm.

The present disclosure further provides a mobile device according to the improved operating concept for positioning estimation in a hybrid positioning system. For example, for performing the respective actions in the method for positioning estimation in a hybrid positioning system, a mobile device is configured to obtain first positioning information based on first positioning signals received from the first positioning system, wherein the first positioning information comprises GNSS position data of the mobile device, transmit second positioning signals to the plurality of locator devices, wherein the second positioning signals contain the first positioning information.

In some implementations, the first positioning information further comprises first time information in the first positioning system. The mobile device may be further configured to generate second time information for the second positioning system and include the second time information in the second positioning signals. For example, the mobile device may be configured to generate the second time information based on the first time information.

In some implementations, the first positioning information further comprises quality indication in the first positioning system, and the mobile device may be further configured to determine a reliability of the first positioning information based on the quality indication. If the first positioning information is determined to be not reliable, the mobile device may be configured to stop transmitting second positioning signals to the plurality of locator devices.

Further implementations and developments of the mobile device become readily apparent for the skilled reader from the various implementations described above in conjunction with the method for positioning estimation in a hybrid positioning system.

The present disclosure further provides a hybrid positioning engine according to the improved operating concept for positioning estimation in a hybrid positioning system. For example, for performing the respective actions in the method for positioning estimation in a hybrid positioning system, a hybrid positioning engine is configured to receive from a plurality of locator devices first positioning information of a mobile device in a first positioning system, and second positioning information of the mobile device in a second positioning system, and determine an estimated position of the mobile device based on the first positioning information and the second positioning information.

Further implementations and developments of the hybrid positioning engine become readily apparent for the skilled reader from the various implementations described above in conjunction with the method for positioning estimation in a hybrid positioning system.

The present disclosure further provides a locator device according to the improved operating concept for positioning estimation in a hybrid positioning system. For example, for performing the respective actions in the method for positioning estimation in a hybrid positioning system, a locator device is configured to receive positioning signals from a mobile device, wherein the positioning signals comprise first positioning information of the mobile device in a first positioning system, generate second positioning information based on the positioning signals, wherein the second positioning information comprises positioning data of the mobile device in a second positioning system, and retrieve the first positioning information from the positioning signals, and provide the first positioning information and the second positioning information to a hybrid positioning engine.

Further implementations and developments of the locator device become readily apparent for the skilled reader from the various implementations described above in conjunction with the method for positioning estimation in a hybrid positioning system.

A hybrid positioning system according to the improved operating concept may comprise at least one hybrid positioning engine according to one of the above implementations, a plurality of locator devices according to one of the above implementations, and at least one mobile device according to one of the above implementations.

Further implementations and developments in a hybrid positioning system become readily apparent for the skilled reader from the various implementations described above in conjunction with the method for positioning estimation in a hybrid positioning system.

### BRIEF DESCRIPTION OF DRAWINGS

The improved operating concept will be explained in more detail in the following with the aid of the drawings. Elements and functional blocks having the same or similar function bear the same reference numerals throughout the drawings. Hence their description is not necessarily repeated in the following drawings.

In the drawings:
- Figure 1: shows an example of a hybrid positioning system;
- Figure 2: shows an example of information paths in a hybrid positioning system;
- Figure 3: shows a flowchart of method 100 for positioning estimation in a hybrid positioning system;
- Figure 4: shows an example BLE advertising signal;
- Figure 5: shows a flowchart of method 200 for positioning estimation in a hybrid positioning system;
- Figure 6: shows example actions of a mobile device in a hybrid positioning system;
- Figure 7: shows example actions of a mobile device in a hybrid positioning system;
- Figure 8: shows example actions of a locator device in a hybrid positioning system;
- Figure 9: shows example actions of a hybrid positioning engine in a hybrid positioning system;
- Figure 10: shows an example implementation of a mobile device;
- Figure 11: shows an example implementation of a locator device; and
- Figure 12: shows an example implementation of a hybrid positioning engine.

### DETAILED DESCRIPTION

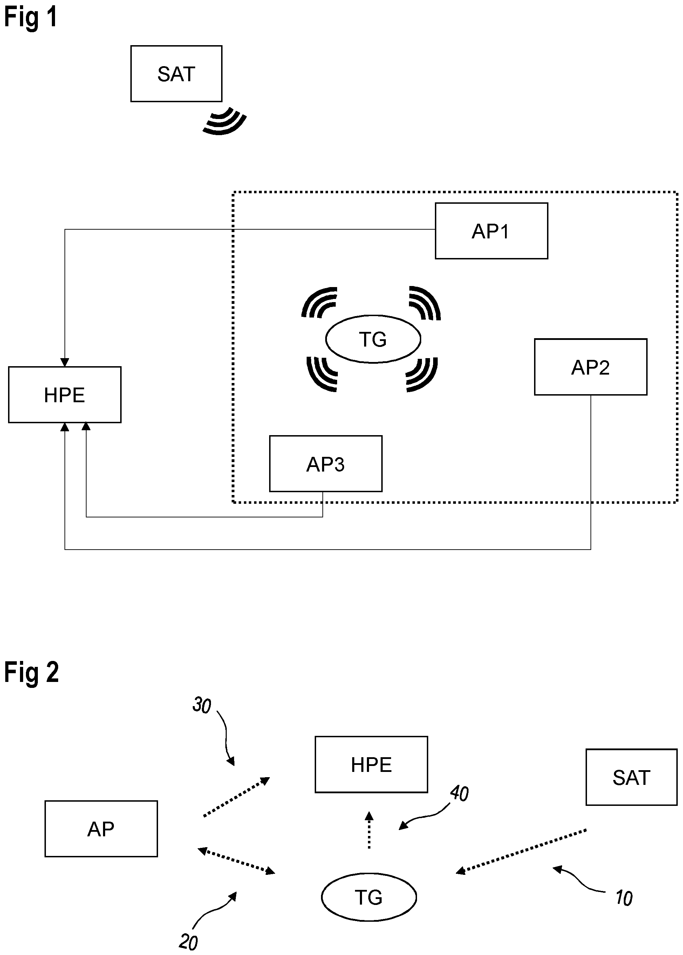

Figure 1 shows an example of a hybrid positioning system. A hybrid positioning engine HPE performs positioning estimation of a mobile device TG in the hybrid positioning system. The hybrid positioning system comprises a GNSS positioning system, wherein TG may receive GNSS signals from any visible GNSS satellite SAT. For example, TG receiving GNSS signals from at least three or four visible GNSS satellites can estimate TG's position in the GNSS positioning system. The hybrid positioning system further comprises a short-range positioning system like a BLE, a UWB or a WiFi positioning system that involves a plurality of pre-deployed locator devices AP1, AP2, AP3. The short-range positioning system may cover an area shown by the dotted line in Figure 1, depending on the coverage of deployed APs. TG in the covered area can be located by the short-range positioning system. For ease of explanation, the short-range positioning system will be explained in conjunction with the BLE and/or UWB and/or WiFi implementations. However, application of the improved operating concept to other short-range positioning systems should be apparent to the skilled reader.

As example implementations, there can be more than three locator devices deployed in an area. As soon as the hybrid positioning engine HPE obtains positioning information from at least three of the locator devices, position estimation can be performed by HPE.

The hybrid positioning system further comprises an HPE. As example implementations, HPE may be deployed independently inside (not shown in Figure 1) or outside of the covered area of the short-range positioning system. As further example implementations, HPE may be co-located with one of APs. For example, the functionality of HPE may be implemented in one of APs.

Figure 2 shows an example of information paths in a hybrid positioning system such as the one in Figure 1.

Information path 10 is from SAT to TG for transmitting GNSS signals. Information path 10 is a satellite receiving link. Information path 20 is between TG and an AP, e.g. any one of AP1 to AP3 in the same BLE positioning system. Information path 20 is a BLE wireless link, a UWB wireless link, or a WiFi link. The type of the wireless link corresponds to the implemented short-range positioning system. For example, if the implemented short-range positioning system is a BLE positioning system, information path 20 is a BLE link belonging to the BLE positioning system. TG may transmit signals to AP over information path 20. In some implementations, information path 20 may be bidirectional, and AP may transmit signals to TG.

Information path 30 is from AP to HPE for providing positioning information to HPE. When HPE is not co-located with AP, information path 30 may be a wired connection, or a wireless connection such as a BLE, a UWB, or a WiFi link corresponding to the implemented short-range positioning system. When HPE is co-located with AP, information path 30 is implemented internally in AP.

Information path 40 is from TG to HPE for transmitting positioning information such as GNSS based positioning information to HPE. Information path 40 is a wireless link, and may be implemented in a WiFi network or a cellular network. In case that information path 20 is a WiFi link and information path 40 is a WiFi link, the WiFi network for information path 20 may be a different network with the WiFi network for information path 40, so that TG have different connectivity with APs and with HPE. For example, TG has connectivity with HPE in a WiFi network, but may have or not have connectivity with APs in another WiFi network.

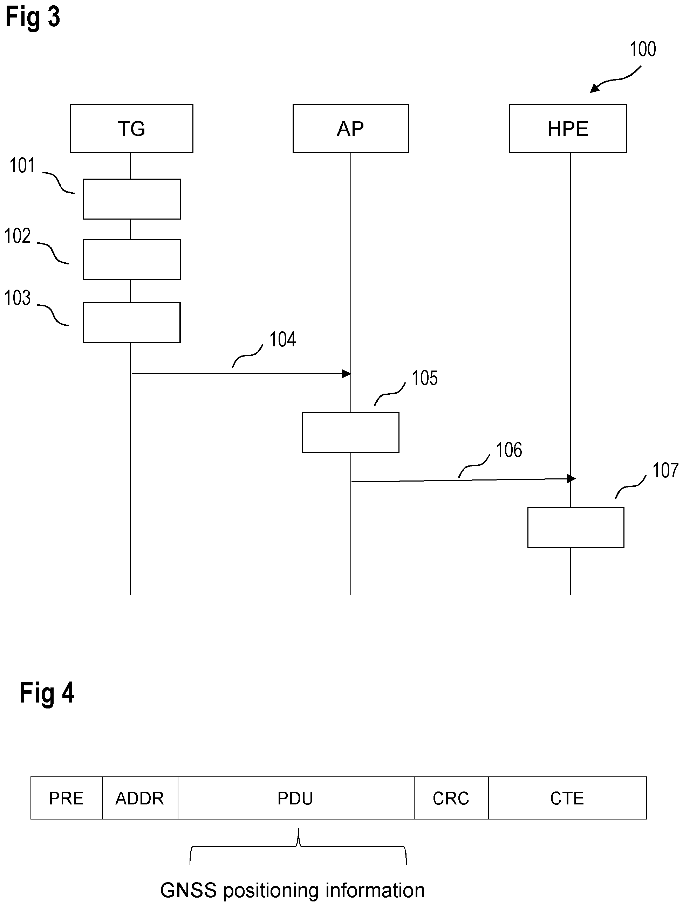

Figure 3 shows a flowchart of method 100 for positioning estimation in a hybrid positioning system. Method 100 may be carried out in the hybrid positioning system shown in Figure 1 which may comprise the information paths shown in Figure 2. In the following description, a hybrid positioning system comprising a GNSS positioning system and a BLE positioning system is taken as an example for carrying out method 100. In some implementations, a different positioning system or additional positioning systems may be comprised in the hybrid positioning system.

In step 101, TG receives GNSS signals from SAT. The GNSS signals are transmitted on radio links over information path 10.

In step 102, TG retrieves position related data from the received GNSS signals and estimates a current GNSS position of TG. The estimated GNSS position may be considered as GNSS positioning information to be provided further in the following steps to be used by HPE for positioning estimation.

TG may read the data in the received GNSS signals and estimate the current position of TG, e.g. latitude, longitude, and altitude in the GNSS positioning system. In an example implementation, TG may estimate the current position based on GNSS signals from at least three or four GNSS satellites. As further examples, the GNSS signals may further include additional enhancement information, e.g. differential GNSS positioning information, real time kinematic, RTK, information, etc. to improve the accuracy of the estimated GNSS position. There may be enhancement signals for improving the GNSS signals and the positioning estimation at TG from other GNSS service providers, for example, RTK signals. The estimation of the GNSS position of TG may be improved using the enhancement signals. Corresponding methods for estimating positions of a mobile device based on GNSS signals transmitted from GNSS satellites or additionally enhancement signals from other service providers are known to the skilled person and therefore not described in more detail here. In some implementations, TG may directly use the retrieved data as the GNSS positioning information.

In step 103, TG includes the GNSS positioning information, e.g. the estimated GNSS position, in BLE advertising signals. Figure 4 shows an example BLE advertising signal. ABLE advertising signal may include packet data and constant tone extension, CTE. Packet data may further include preamble, PRE, access address, ADDR, protocol data unit, PDU, and cyclic redundancy check, CRC. The GNSS positioning information can be included in the PDU of an advertising signal. CTE is used by an AP to estimate a relative position of TG with respect to AP. CTE can be included in the same advertising signal with the GNSS positioning information in the PDU of the same advertising signal. As such, the advertising signal includes positioning information of both positioning systems, namely the GNSS positioning information of TG, e.g. the GNSS position in the GNSS positioning system, and CTE for locating TG in the BLE positioning system.

Referring back to Figure 3, in step 104, TG transmits the BLE advertising signals including the GNSS positioning information and CTE to APs in the BLE positioning system. The advertised BLE signals may be transmitted via BLE links over information path 20 in Figure 2. An AP that is in coverage of the advertised BLE signals of TG can receive the advertised BLE signals. For example, at least one of AP1 to AP3 in Figure 1 may receive the advertised BLE signals with the GNSS positioning information and CTE.

In some implementations, TG may periodically advertise the BLE signals with CTE. When GNSS positioning information is available at TG, TG may periodically advertise the BLE signals with the GNSS positioning information and CTE.

When the GNSS positioning information is transmitted within the BLE advertising signals, TG may not transmit the GNSS positioning information to HPE directly over a different wireless link, e.g. over information path 40 via a WiFi or a cellular network. In such case, TG may switch off the communication functionality for other wireless networks such as the WiFi or the cellular network in order to save power.

In step 105, AP, which receives the advertised BLE signals with the GNSS positioning information and CTE from TG, generates BLE positioning information and retrieves the GNSS positioning information of TG from the received BLE signals.

For example, relative positions measured by AP can be considered as the BLE positioning information between AP and TG. AP may estimate a distance between AP and TG based on a received signal strength, and/or a time difference, and/or round trip time, and/or angle of arrival, AoA. Additionally or as an alternative, AP may estimate a direction between AP and TG based on AoA. Additionally or as an alternative, AP may perform a high accuracy distance measurement, HADM. Corresponding methods for estimating the BLE positioning information of a mobile device by a locator device are known to the skilled person and therefore not described in more detail here.

As such, AP obtains positioning information of both positioning systems, namely the GNSS positioning information of TG, e.g. the GNSS position in the GNSS positioning system, and the BLE positioning information of TG, e.g. the relative positions to AP.

In step 106, AP provides the GNSS positioning information of TG and the BLE positioning information of TG to HPE. For example, AP transmits both the positioning information via a wired link or a wireless link, e.g. a BLE link with HPE over information path 30 in Figure 2, if HPE is not co-located with AP; or AP provides both the positioning information internally to the HPE functionality if HPE is implemented in AP.

Steps 105 and 106 can be performed by all APs that receive the advertised BLE signals with the GNSS positioning information and CTE from TG.

As such, HPE obtains both the GNSS positioning information and the BLE positioning information of TG from at least one AP in the BLE positioning system.

In some implementations, HPE may also obtain the GNSS positioning information directly from TG, if TG transmits the GNSS positioning information directly to HPE via a different wireless link, e.g. over the information path 40 in Figure 2.

In step 107, HPE estimates position of TG based on both the GNSS positioning information and the BLE positioning information of TG. For example, the GNSS position of TG and the relative positions of TG to APs are considered together by HPE to determine a current position of TG. For example, HPE may choose a local coordinate system for the BLE positioning system and estimate a local position of TG in the local coordinate system based on the relative positions of TG to APs. HPE may further map the GNSS positions in the local coordinate system, by for example choosing a reference position in the GNSS positioning system to align with a reference coordinate in the local coordinate system. In this way, a local position of TG and a mapped GNSS position of TG can be considered together in the local coordinate system. As another example, HPE may use a global coordinate system in the GNSS positioning system and map local positions in the BLE positioning system in the global coordinate system by aligning a reference local coordinate in the BLE positioning system with a reference global coordinate in the global coordinate system. HPE may perform a fusion algorithm for positioning estimation, using a signal processing algorithm such as weighted least squares or a Kalman filter or a particle filter, or a machine learning algorithm. Corresponding algorithms for fusion based positioning estimation are known to the skilled person and therefore not described in more detail here.

Method 100 can be performed continuously, such that the method starts over with step 101 by receiving further GNSS signals.

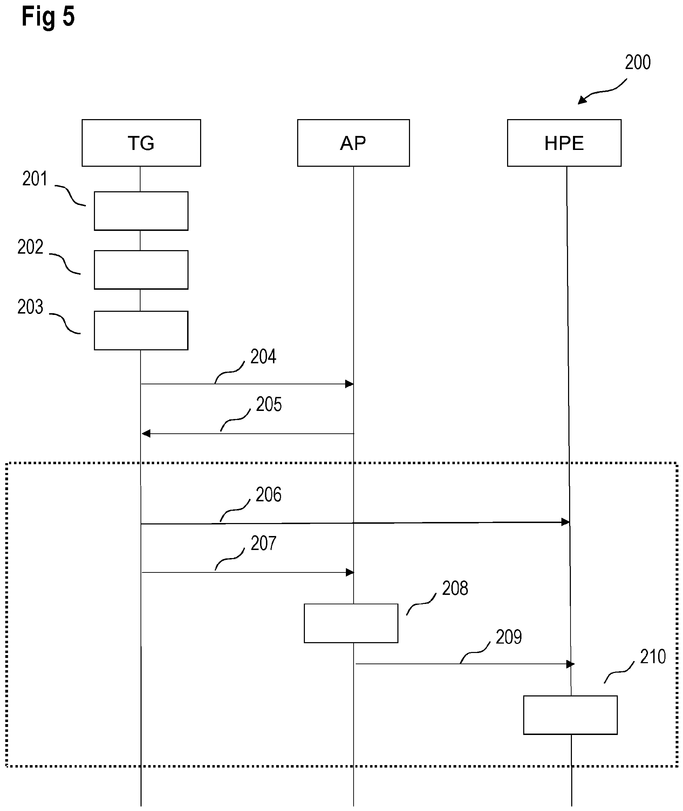

Figure 5 shows a flowchart of method 200 for positioning estimation in a hybrid positioning system. Method 200 includes additional operations compared with method 100 by utilizing BLE responses. Method 200 may be carried out in the hybrid positioning system shown in Figure 1 which may comprise the information paths shown in Figure 2. Information path 20 in Figure 2 can be bidirectional BLE links between TG and APs in the BLE positioning system.

In steps 201 to 203, TG performs steps 101 to 103 in method 100 respectively, to include GNSS positioning information and CTE in BLE advertising signals.

In step 204, TG transmits the BLE advertising signals and waits for responses from any of APs in the BLE positioning system. For example, TG transmits periodic advertising signals according to the Periodic Advertising with Responses, PAwR, in Bluetooth standards of 5.4 onwards. In some implementations, the periodic advertising signals may not include the GNSS positioning information if the GNSS positioning information is not available in TG.

In step 205, AP which receives the periodic advertising signals and supports PAwR, sends responses according to the PAwR, as acknowledgement to TG that the periodic advertising signals are received by AP. As such, TG is acknowledged that the GNSS positioning information, if included in the periodic advertising signals, are received by AP.

If TG receives PAwR responses from at least one AP in the BLE positioning system, TG may continue performing steps 201 to 204 upon receiving GNSS signals. For example, TG may continue including the GNSS positioning information in the periodic advertising signals, and not transmitting the GNSS positioning information via a different wireless link to HPE, e.g. over information path 40, in order to save power. In such case, steps 105 to 107 in method 100 are continued to be performed, so that the GNSS positioning information are obtained by HPE from APs (not shown in Figure 5), and steps 206 to 210 shown in dotted part in Figure 5 may not be performed.

If TG does not receive any PAwR response, e.g. if TG is out of coverage of all APs in the BLE positioning system, or if APs do not support PAwR, and thus step 205 cannot be performed by AP, TG may determine that the GNSS positioning information is not to be delivered to HPE over the BLE positioning system. In such case, steps 206 to 210 shown in dotted part in Figure 5 can be performed.

In step 206, TG may directly transmit the GNSS positioning information, e.g. the estimated GNSS position to HPE via a different wireless link to HPE, e.g. via a WiFi or a cellular network over information path 40. This ensures that the GNSS positioning information of TG is obtained by HPE. Step 206 may include switching on WiFi or cellular communication in TG for the transmission.

In step 207, TG may stop including the GNSS positioning information, e.g. the estimated GNSS position, in BLE advertising signals, and may prepare BLE advertising signals only with CTE. In step 208, AP which receives the advertised BLE signals generates BLE positioning information based on the received CTE. For example, AP may generate BLE positioning information as described in step 105 in method 100. In step 209, AP provides BLE positioning information to HPE.

In step 210, HPE obtains the GNSS positioning information provided by TG in step 206, and the BLE positioning information provided by APs in step 209. HPE may perform a fusion algorithm for positioning estimation as described in step 107 in method 100. In some implementations, upon receiving one of the GNSS positioning information and the BLE positioning information, HPE may estimate positions of TG based on the received one positioning information.

The steps in method 200 related to AP can be performed by any one of APs in the BLE positioning system.

In some implementations, the steps in method 200 may be carried out in different orders. For example, before GNSS positioning signals are received by TG, TG may advertise BLE signals with or without CTE according to PAwR, and receives PAwR responses. Upon receiving GNSS signals, if PAwR responses have been received recently by TG, TG may include GNSS positioning information in the BLE signals with CTE to AP from which PAwR responses are received; if no PAwR response is received recently by TG, steps 206 to 210 in method 200 can be performed.

Method 200 can be performed continuously, such that the method starts over with step 201 by receiving further GNSS signals.

Further implementations of method 200 become readily apparent from the various implementations described above in conjunction with method 100.

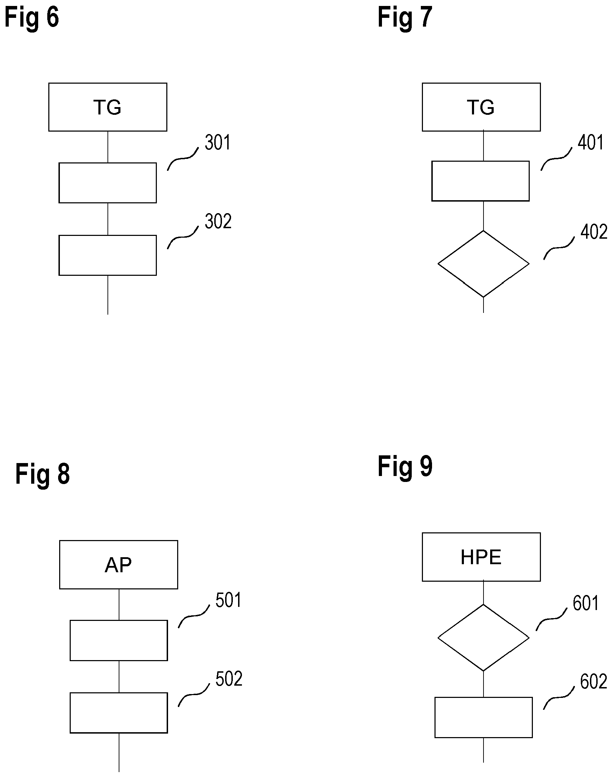

Figure 6 shows example actions performed by a mobile device, e.g. TG in a hybrid positioning system. TG can perform actions according to the above descriptions in method 100 and 200. In some implementations, TG can further perform actions shown in Figure 6.

In action 301, TG may generate synchronization time information for the BLE positioning system. For example, TG may include time sequence numbers in the synchronization time information when TG transmits BLE advertising signals.

In some implementations, when TG receives GNSS signals, TG may obtain GNSS time information about the GNSS positioning system based on the received GNSS signals. For example, the GNSS signals may contain a universal coordinated time that is based on a universal time server. TG may include the GNSS time information in the GNSS positioning information to be obtained by HPE. Based on the GNSS time information, TG may generate the synchronization time information for synchronization between the GNSS positioning information and the BLE positioning information.

In action 302, when TG advertises BLE signals, TG may include the synchronization time information in the BLE signals. The synchronization time information may be included in the PDU of a BLE signal as shown in Figure 4.

In some implementations, no matter whether the GNSS positioning information and/or CTE described in method 100 and 200 are included in the BLE signals, TG may always include the synchronization time information whenever it advertises a BLE signal.

When a BLE signal containing the synchronization time information is received by an AP in the BLE positioning system, AP may retrieve the synchronization time information, and include the synchronization time information in the BLE positioning information to be provided to HPE as described in method 100 and 200. In some cases, e.g. without AP receiving the synchronization time information from TG, AP may directly generate the synchronization time information and provide to HPE with the BLE positioning information. In such cases, AP may generate the synchronization time information based on AP's local time information or time sequence numbers, etc.

When HPE obtains the synchronization time information and the GNSS time information, HPE may perform a synchronization between the GNSS positioning information and the BLE positioning information. For example, the GNSS positioning information and the BLE positioning information that belong to a common time frame are selected by HPE to perform the fusion based positioning estimation. If the GNSS positioning information and the BLE positioning information available at HPE do not belong to a common time frame, only one of the positioning information may be used for positioning estimation of TG. For example, only the positioning information obtained more recently and/or only the positioning information with better quality is used for positioning estimation of TG.

Figure 7 shows example actions performed by a mobile device, e.g. TG in a hybrid positioning system. TG can perform actions according to the above descriptions in method 100 and 200. In some implementations, TG can further perform actions shown in Figure 7.

In action 401, when TG receives GNSS signals, TG may determine a reliability, e.g. a level of reliability or a level quality of the GNSS positioning information based on the received GNSS signals. For example, the GNSS signals may contain a quality indication, and/or additional enhancement positioning information, etc. and TG determines the reliability based on such information; or TG may determine the reliability based on the reception quality of the GNSS signals.

The reliability may be accompanied with multiple quality indicators to further reflect a quality of the GNSS positioning information, such as number of visible satellites at TG, dilution of precision, position covariance, etc. The quality indicators can be used in the positioning estimation in HPE, for example, used as parameters in the fusion algorithm.

In action 402, TG may determine whether to provide the GNSS positioning information to HPE.

If the BLE positioning system is not available, for example, the BLE positioning system is switched off, or TG is not in coverage of any of APs, TG transmits (not shown in Figure 7) directly the GNSS positioning information to HPE over a different wireless link, wherein the GNSS positioning information includes the GNSS position of TG, and/or additionally the determined reliability and the reliability may be accompanied with at least one of the multiple quality indicators.

If the BLE positioning system is available, and if TG considers that the reliability of the GNSS positioning information is not acceptable, TG may determine not to provide further the GNSS positioning information, either over the BLE positioning system or directly to HPE. In such case, a transmission effort of the GNSS positioning information is saved. In some implementations, TG may set a flag in a BLE signal when advertising the BLE signal, to indicate that the reliability of the GNSS positioning information is not acceptable.

If the BLE positioning system is available, TG may provide (not shown in Figure 7) further the GNSS positioning information regardless of the reliability. TG may include the reliability, which may be accompanied with at least one of the multiple quality indicators, within the GNSS positioning information in addition to the GNSS position, and provide the GNSS positioning information over the BLE positioning system or directly to HPE as described in method 100 and 200.

Figure 8 shows example actions performed by a locator device, e.g. any of APs in a hybrid positioning system. AP can perform actions according to the above descriptions in method 100 and 200. In some implementations, AP can further perform actions shown in Figure 8.

In action 501, AP may generate confidence values of the BLE positioning information of TG. For example, AP receives advertised BLE signals with CTE as described in method 100 and 200, wherein the advertised BLE signals may contain or not contain GNSS positioning information. AP or a combination of APs generates BLE positioning information of TG, e.g. relative positions between AP and TG, based on CTE, and additionally, determines confidence values reflecting the reliability or the quality of the BLE positioning information.

The confidence values may be accompanied with multiple quality indicators to further reflect a quality of the BLE positioning information, such as received signal strength indicator, RSSI level, etc. The quality indicators can be used in the positioning estimation in HPE, for example, used as parameters in the fusion algorithm.

In action 502, AP provides the BLE positioning information together with the correspondent confidence values to HPE.

Figure 9 shows example actions performed by a hybrid positioning engine, e.g. HPE in a hybrid positioning system. HPE can perform actions according to the above descriptions in method 100 and 200. In some implementations, HPE can further perform actions shown in Figure 9.

In action 601, HPE may determine how to perform positioning estimation of TG considering the reliability of the obtained GNSS positioning information and the obtained BLE positioning information. For example, HPE may determine that only one of the positioning information is reliable to be used for positioning estimation, or both the positioning information is reliable to be used for positioning estimation, based on e.g. a quality estimation of the positioning information, and/or the reliability provided in the GNSS positioning information and/or the confidence values provided in the BLE positioning information.

In action 602, HPE performs positioning estimation of TG using the reliable one or both positioning information. If a quality indicator described in Figures 7 and 8 is additionally obtained, HPE may use the quality indicator as a parameter for the positioning estimation.

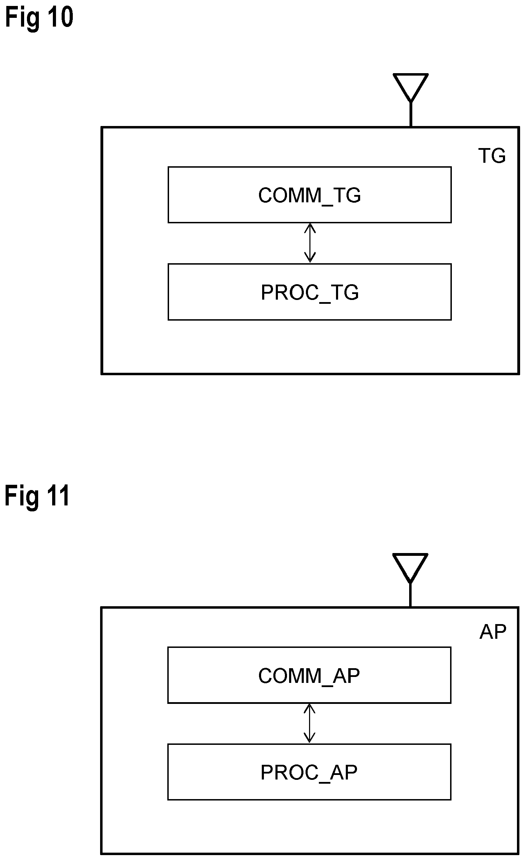

Figure 10 shows an example implementation of a mobile device. The mobile device may be TG present in the hybrid positioning system in Figure 1. TG is configured to perform the actions by TG as described in method 100. TG may be further configured to perform the actions by TG as described in method 200 and Figures 6 and 7.

TG may comprise an antenna for signal reception and transmission, a communication unit COMM_TG and a processing unit PROC_TG. COMM_TG may be configured to receive GNSS satellite signals, support WiFi and/or cellular communications, BLE and/or UWB communications. TG may also comprise multiple communication units each being capable to receive GNSS satellite signals, support WiFi and/or cellular communications, BLE and/or UWB communication. A communication unit for WiFi communications may be capable to communicate with multiple WiFi networks. PROC_TG may be configured to perform actions by TG as described above. Further configurations of TG become readily apparent for the skilled reader from the various implementations described above in conjunction with the methods and actions for positioning estimation in a hybrid positioning system.

Figure 11 shows an example implementation of a locator device. The locator device may be any of APs present in the hybrid positioning system in Figure 1. AP is configured to perform the actions by AP as described in method 100. AP may be further configured to perform the actions by AP as described in method 200 and Figure 8, and in conjunction of Figures 6 and 7 when an AP is involved.

AP may comprise an antenna which may in turn comprise multiple antenna elements, a communication unit COMM_AP and a processing unit PROC_AP. COMM_AP may be configured to support BLE and/or UWB communications, and a wired communication. COMM_AP may be configured to support bidirectional communication. PROC_AP may be configured to perform actions by AP as described above. Further configurations of AP become readily apparent for the skilled reader from the various implementations described above in conjunction with the methods and actions for positioning estimation in a hybrid positioning system.

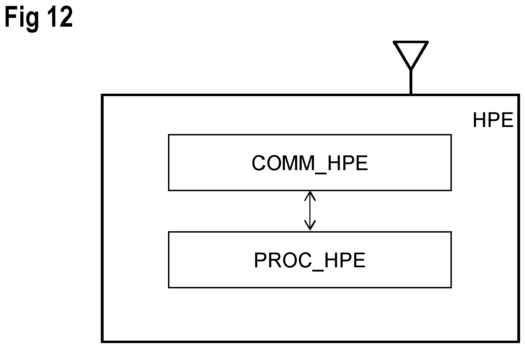

Figure 12 shows an example implementation of a hybrid positioning engine. The hybrid positioning engine may be HPE present in the hybrid positioning system in Figure 1. HPE is configured to perform the actions by HPE as described in method 100. HPE may be further configured to perform the actions by HPE as described in method 200 and Figure 9, and in conjunction of Figures 6 and 7 when HPE is involved.

HPE may comprise a communication unit COMM_HPE and a processing unit PROC_HPE. HPE may further comprise an antenna which may in turn comprise multiple antenna elements. COMM_HPE may be configured to support WiFi and/or cellular communications, BLE and/or UWB communications, and a wired communication. COMM_HPE may be capable to communicate with multiple WiFi networks. PROC_HPE may be configured to perform actions by HPE as described above. Further configurations of HPE become readily apparent for the skilled reader from the various implementations described above in conjunction with the methods and actions for positioning estimation in a hybrid positioning system.

Hence, with the various implementations described above improved operating concept for positioning estimation in a hybrid positioning system, GNSS positioning information can be efficiently and reliably delivered over BLE positioning system, both positioning information can be synchronized in the hybrid positioning engine, the hybrid positioning system can operate in an efficient and reliable way.

Various embodiments of the improved operating concept can be implemented in the form of logic in software or hardware or a combination of both. The logic may be stored in a computer readable or machine-readable storage medium as a set of instructions adapted to direct one or more processors of a (distributed) computer system to perform a set of steps disclosed in embodiments of the improved operating concept. The logic may form part of a computer program product adapted to direct an information-processing device to automatically perform a set of steps disclosed in embodiments of the improved operating concept.

The specification and drawings are, accordingly, to be regarded in an illustrative rather than a restrictive sense. However, it will be evident that various modifications and changes may be made thereunto without departing from the scope of the invention as set forth in the claims.

### LIST OF REFERENCE SIGNS

- TG: mobile device
- HPE: hybrid positioning engine
- AP, AP1, AP2, AP3: locator devices
- 10-40: information paths
- 100, 200: method
- 101-107, 201-210: steps
- 301-602: actions
- COMM_TG, COMM_AP, COMM_HPE: communication unit
- PROC_TG, PROC_AP, PROC_HPE: processing unit

## Claims

1. A method for positioning estimation in a hybrid positioning system comprising a first positioning system, which is based on global navigation satellite system, GNSS, a second positioning system, which includes a plurality of locator devices, and a hybrid positioning engine, the method comprising:
- obtaining, by a mobile device, first positioning information based on first positioning signals received from the first positioning system, wherein the first positioning information comprises GNSS position data of the mobile device;
- transmitting, by the mobile device, second positioning signals to the plurality of locator devices via a first wireless network, wherein the second positioning signals contain the first positioning information;
- generating, by the plurality of locator devices, second positioning information based on the second positioning signals, wherein the second positioning information comprises positioning data of the mobile device in the second positioning system, and retrieving the first positioning information from the second positioning signals;
- providing, by the plurality of locator devices, the first positioning information and the second positioning information to the hybrid positioning engine; and
- determining, by the hybrid positioning engine, an estimated position of the mobile device based on the first positioning information and the second positioning information.

2. The method according to claim 1, further comprising:
- transmitting, by each of the plurality of locator devices, respective responses to the mobile device upon receiving the respective second positioning signals;
- if the mobile device does not receive any of the responses:
- stopping transmitting by the mobile device the second positioning signals;
- transmitting, by the mobile device, third positioning signals to the plurality of locator devices via the first wireless network;
- generating, by the plurality of locator devices, the second positioning information based on the third positioning signals; and
- transmitting, by the mobile device, the first positioning information to the hybrid positioning engine over a second wireless network, and providing, by the plurality of locator devices, the second positioning information to the hybrid positioning engine; and
- if the mobile device receives at least one of the responses:
- stopping transmitting by the mobile device the third positioning signals;
- transmitting, by the mobile device, the second positioning signals to the plurality of locator devices via the first wireless network;
- generating, by the plurality of locator devices, the second positioning information based on the second positioning signals, and retrieving the first positioning information from the second positioning signals; and
- providing, by the plurality of locator devices, the first positioning information and the second positioning information to the hybrid positioning engine.

3. The method according to claim 2, wherein
- the first wireless network is a Bluetooth network, a ultra wideband network, or a WiFi network; and/or
- the second wireless network is a WiFi network or a cellular network.

4. The method according to claim 2 or 3, wherein the second positioning system is based on Bluetooth technology, and the responses are generated according to periodic advertising with responses, PAwR, in the Bluetooth technology.

5. The method according to one of claims 2 to 4, wherein the first positioning information further comprises first time information in the first positioning system, the method further comprising:
- generating, by the mobile device, second time information for the second positioning system, in particular based on the first time information;
- including, by the mobile device, the second time information in the second positioning signals and/or the third positioning signals; and
- performing, by the hybrid positioning engine, a synchronization of the first positioning information and the second positioning information based on the first time information and the second time information.

6. The method according to one of claims 1 to 5, wherein the second positioning information comprises at least one of:
- distance estimation based on received signal strength and/or channel sounding and/or round trip time; and
- relative angle estimation based on signal arriving angles.

7. The method according to one of claims 1 to 6, wherein the first positioning information further comprises quality indication in the first positioning system, the method further comprising:
- determining, by the hybrid positioning engine, a first reliability of the first positioning information based on the quality indication;
- if the first positioning information is determined to be reliable, determining by the hybrid positioning engine the estimated position of the mobile device based on the first positioning information and the second positioning information; and
- if the first positioning information is determined to be not reliable, determining by the hybrid positioning engine the estimated position of the mobile device based on the second positioning information.

8. The method according to one of claims 1 to 7, the method further comprising:
- including in the second positioning information, by the plurality of locator devices, confidence values of the positioning data of the mobile device in the second positioning system;
- determining, by the hybrid positioning engine, a second reliability of the second positioning information based on the confidence values;
- if the second positioning information is determined to be reliable, determining by the hybrid positioning engine the estimated position of the mobile device based on the first positioning information and the second positioning information; and
- if the second positioning information is determined to be not reliable, determining by the hybrid positioning engine the estimated position of the mobile device based on the first positioning information.

9. The method according to one of claims 1 to 8, wherein determining the estimated position of the mobile device based on the first positioning information and the second positioning information comprises a fusion processing of the first positioning information and the second positioning information using a signal processing algorithm and/or a machine learning algorithm.

10. A mobile device, configured for positioning estimation in a hybrid positioning system comprising a first positioning system, which is based on global navigation satellite system, GNSS, a second positioning system, which includes a plurality of locator devices, and a hybrid positioning engine, the mobile device being configured to:
- obtain first positioning information based on first positioning signals received from the first positioning system, wherein the first positioning information comprises GNSS position data of the mobile device; and
- transmit second positioning signals to the plurality of locator devices, wherein the second positioning signals contain the first positioning information.

11. The mobile device according to claim 10, wherein the first positioning information further comprises first time information in the first positioning system, the mobile device further configured to:
- generate second time information for the second positioning system, in particular based on the first time information; and
- include the second time information in the second positioning signals.

12. The mobile device according to claim 10, wherein the first positioning information further comprises quality indication in the first positioning system, the mobile device further configured to:
- determine a reliability of the first positioning information based on the quality indication; and
- if the first positioning information is determined to be not reliable, stop transmitting second positioning signals to the plurality of locator devices.

13. A hybrid positioning engine, configured for positioning estimation in a hybrid positioning system comprising a first positioning system, which is based on global navigation satellite system, GNSS, a second positioning system, which includes a plurality of locator devices, and a hybrid positioning engine, the hybrid positioning engine being configured to:
- receive, from the plurality of locator devices, first positioning information of a mobile device in the first positioning system, and second positioning information of the mobile device in the second positioning system; and
- determine an estimated position of the mobile device based on the first positioning information and the second positioning information.

14. A locator device, configured for positioning estimation in a hybrid positioning system comprising a first positioning system, which is based on global navigation satellite system, GNSS, a second positioning system, which includes a plurality of locator devices, and a hybrid positioning engine, the locator device being configured to:
- receive positioning signals from a mobile device, wherein the positioning signals comprise first positioning information of the mobile device in the first positioning system;
- generate second positioning information based on the positioning signals, wherein the second positioning information comprises positioning data of the mobile device in the second positioning system, and retrieve the first positioning information from the positioning signals; and
- provide the first positioning information and the second positioning information to the hybrid positioning engine.

15. A hybrid positioning system comprising a first positioning system and a second positioning system, the system comprising at least one hybrid positioning engine according to claim 13, a plurality of locator devices according to claim 14, and at least one mobile device according to one of claims 10 to 12.
